# EUROPEAN PATENT SPECIFICATION

(11) **EP 0 421 428 B1**
(45) Date of publication and mention of the grant of the patent: **23.08.1995**
(21) Application number: 90119063.7
(22) Date of filing: 04.10.1990
(51) Int. Cl.: H04N 5/16

(54) **Sampled video signal generating device for improving deviation based on difference of circuit characteristics among channels**
Vorrichtung zur Erzeugung eines abgetasteten Videosignals für die Verbesserung der auf Schaltungseigenschaftenunterschied zwischen den Kanälen basierenden Abweichung
Dispositif de génération d'un signal vidéo échantillonné pour l'amélioration de la déviation basée sur la différence des caractéristiques de circuit entre les canaux

(30) Priority: 03.10.1989 JP 258322/89; 31.01.1990 JP 21504/89
(43) Date of publication of application: 10.04.1991
(73) Proprietor: SHARP KABUSHIKI KAISHA, Osaka 545 (JP)
(72) Inventor: Hiramatsu, Yonejiro, Mitaka-shi, Tokyo-to (JP); Shibazaki, Shigeru, Iruma-gun, Saitama-ken (JP); Sakatsuji, Osamu, 5-3-32 Asahi-cho, Kashiwa-shi, Chiba-ken (JP); Sudoh, Seiji, Minami Hanashima, Matsudo-shi, Chiba-ken (JP)
(74) Representative: Brown, Kenneth Richard

(56) References cited:
- US-A- 4 356 508
- US-A- 4 414 572
- PATENT ABSTRACTS OF JAPAN, vol. 11, no. 31 (E-475)[2478], 29th January 1987;& JP-A-61 198 885 (SONY) 03-09-1986

## Description

### BACKGROUND OF THE INVENTION

### Field of the Invention

The present invention generally relates to a video signal processing device for generating display drive signals from an applied video signal. The present invention has particular applicability to liquid crystal display.

### DESCRIPTION OF THE BACKGROUND ART

In the high quality television system known as a television system for the next generation, the so-called "High Vision", resolution is increased as compared to the present television system, resulting in providing a vivid image to viewers. That is to say, in High Vision, the number of horizontal scanning lines is defined to be 1125 or more for one frame, the interlace ratio is set at 2:1 or there is no interlace, and the aspect ratio at 16:9. On the other hand, in the NTSC system which is one of the current television systems, the number of horizontal scanning lines is determined to be 525 for one frame, the interlace ratio is set at 2:1, and the aspect ratio at 4:3. As a result, the amount of information handled in the High Vision system is about 5 times or more that in the NTSC system.

As described above, since it is necessary to handle a larger amount of information in the high quality television system, various devices have been invented for video signal processing. For example, in a video signal processing circuit for supplying video signals to a liquid crystal display according to the high quality television system, the number of picture elements is considerably increased, so that the video signals should be sampled at an extremely high speed. Video signals sampled at high speed are provided as picture element signals to the horizontal scanning circuits of the respective liquid crystal panels in the liquid crystal display. As the digital horizontal scanning LSI circuit, one of sample-and-hold type is employed because of its excellent technical property.

However, as a digital horizontal LSI has a limit in speed of high vision signal scanning, a plural simultaneous scanning system of dividing a single video signal into a plurality of channels is employed. That is to say, a continuous video signal is sampled at predetermined time intervals to produce sampled video signals divided into a plurality of channels. The produced signals are simultaneously inputted to the horizontal scanning circuits. In other words, the operational speed of the horizontal scanning circuit connected to each channel can be reduced to 1/n by dividing a single video signal into sampled video signals of n channels. Since the operational speed of the horizontal scanning circuit connected to each channel is reduced, desired horizontal resolution can be easily implemented without reducing video frequency bandwidth by the horizontal scanning circuit. Here, the phase disorder among the n channels should be restrained within a permitted value corresponding to the sampling frequency.

As described above, since a single video signal is divided into a plurality of channels by sampling and the video signal processing for obtaining sampled video signals is performed for each channel, difference in circuit characteristics among signal processing circuits for handling video signals of the respective channels is undesirable. That is to say, when deviation of circuit characteristics exists among signal processing circuits, the picture quality of image obtained according to video signals generated from the respective signal processing circuits is degraded. Such deviation of circuit characteristics occurs not only because of various differences of manufacturing conditions but also can be produced due to environmental conditions in use such as temperature and moisture.

JP-A-61198 885 discloses a magnetic tape video recording and reproducing device in which the gain of each of two recording/reproduction channels carrying different image colour information is controlled so that the level of a step-form reference signal inserted during recording into the respective channels in the vertical blanking period has a prescribed value during reproduction.

### SUMMARY OF THE INVENTION

The object of the invention is to improve the image display obtained from a video signal processing device which generates display drive signals from an applied video signal by dividing the horizontal picture information into two or more channels.

The invention, as defined by independent claim 1, provides a video signal processing device for generating display drive signals (R1-Rn) from an applied video signal, the device comprising:
sampling means for sampling the applied video signal (R) in a predetermined cycle so as to divide the signal into n sampled video signals, n ≧ 2, between or among which sampled video signals the picture information is divided, said sampling means comprising A/D converting means (6) for converting the applied video signal into n digital signals in said predetermined cycle;
n signal processing means (9,11,12,16,17) connected to an output of said A/D converting means, for applying predetermined signal processing to the respective converted digital video signals so as to generate respective display drive signals, said n signal processing means including n D/A converting means (9₁-9ₙ) for converting the respective converted digital video signals into n analogue signals;
reference signal means (22,20,4) for inserting a reference signal into the vertical blanking period of the supplied video signal before the applied video signal is sampled by the sampling means;
detecting means (18,23) for detecting the reference signals as appearing in the processed signals output by the respective signal processing means; and
control means (21,10,25,26;21,13,14,15) for controlling said processed signals output by the signal processing means, each according to whether the associated detected reference signal lies within a predetermined range, so as to adjust for differences between or among the circuit characteristics of the n signal processing means;
said control means comprising full scale level control means (21,10,25,26) for controlling the vicinity of the highest level of the processed signals output by said signal processing means by controlling full scale level of each of said n D/A converting means.

The dependent claims 2 to 10 relate to preferred features of the invention.

### BRIEF DESCRIPTION OF THE DRAWINGS

Fig. 1 is a block diagram of a liquid crystal display device to which a video signal processing circuit of one embodiment of the present invention can be applied.

Fig. 2 is a block diagram of a video signal processing circuit for liquid crystal display showing one embodiment of the present invention.

Fig. 3 is a waveform diagram showing a waveform in display period of a video signal for liquid crystal display.

Figs. 4A-4D are waveform diagrams of reference signals used in the circuit shown in Fig. 2.

Fig. 5 is a waveform diagram showing waveforms of reference signals in a single vertical blanking period shown in Fig. 4.

Fig. 6 is a timing chart for describing operation of the circuit shown in Fig. 2.

Figs. 7 and 8 are flow charts for describing operation of the circuit shown in Fig. 2.

### DESCRIPTION OF THE PREFERRED EMBODIMENT

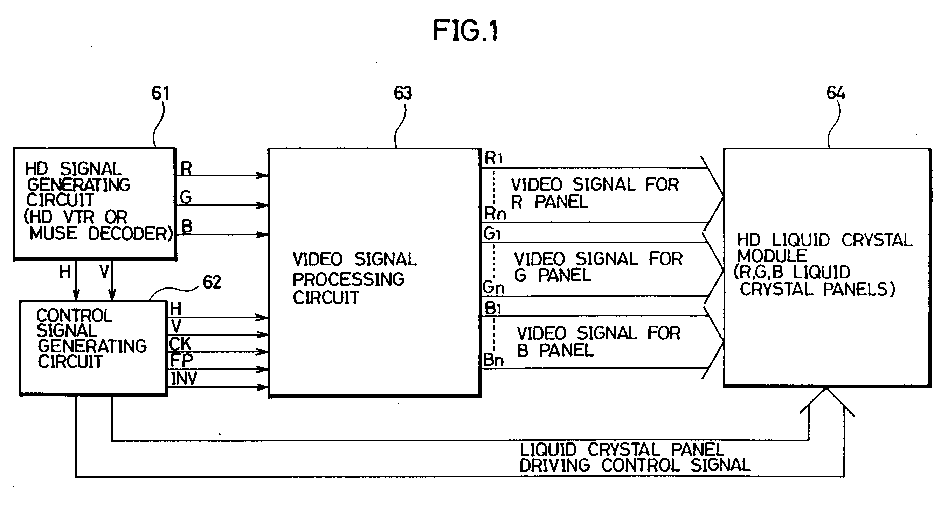

A description will be given of a case where a video signal processing circuit according to the present invention is applied to a liquid crystal display device. Referring to Fig. 1, the liquid crystal display device includes a high definition (referred to as "HD" hereinafter) signal generating circuit 61, a control signal generating circuit 62, a video signal processing circuit 63 for liquid crystal display, and a HD liquid crystal module 64. As HD signal generating circuit 61, HD video tape recorder (VTR) or a multiple sub-Nyquist sampling encoding (MUSE) decoder or the like can be employed. HD signal generating circuit 61 generates R, G and B signals according to high quality television system, a horizontal synchronous signal H, and a vertical synchronous signal V. Control signal generating circuit 62, responsive to the horizontal synchronous signal H and the vertical synchronous signal V, generates various control signals. That is to say, control signal generating circuit 62 generates, in addition to providing horizontal synchronous signal H and vertical synchronous signal V, a clock signal CK, a frame pulse signal FP, an inversion signal, and digital signals necessary for controlling video signal processing and liquid crystal module.

Liquid crystal module 64 includes three liquid crystal panels for R, G and B signals. Video signal processing circuit 63 generates video signals R1 through Rn for the R panel, video signals G1 through Gn for the G panel, and video signals B1 through Bn for the B panel, and digital signals for controlling each module, and supplies them to three liquid crystal panels of module 64. In liquid crystal module 64, based on the supplied video signals, full color image is obtained.

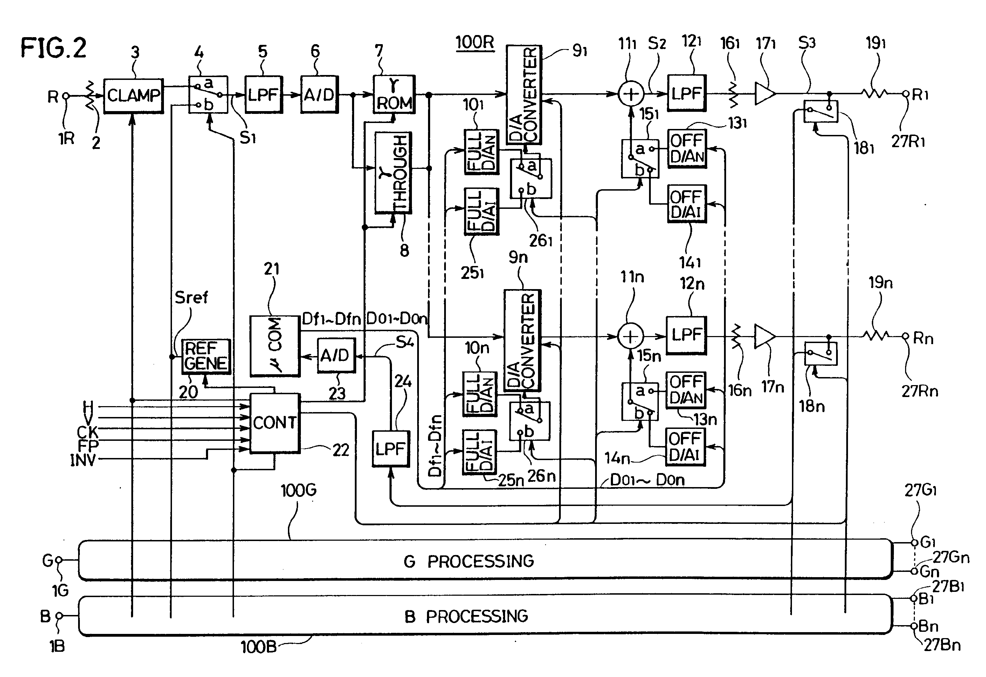

As video signal processing circuit 63 shown in Fig. 1, the circuit shown in Fig. 2 is employed. Referring to Fig. 2, the video signal processing circuit for liquid crystal display includes a R signal processing circuit 100R for R signal processing, a G signal processing circuit 100G for G signal processing, and a B signal processing circuit 100B for B signal processing. Since the respective signal processing circuits 100R, G and B have similar circuit structure, only R signal processing circuit 100R will be described to simplify the description below.

R signal processing circuit 100R is connected to receive an R signal generated by HD signal generating circuit 61 shown in Fig. 1 through an input terminal 1R. The R signal provided at the terminal 1R is provided to a terminal a of a switching circuit 4 through an attenuator 2 and a clamp circuit 3. Switching circuit 4 is connected to receive a reference signal Sref generated by a reference signal generator 20 at its terminal b. The reference signal Sref will be described later in detail.

Switching circuit 4 repeats switching operation in response to control signals generated from controller 22 to insert the reference signal Sref into vertical blanking periods of the R signal. In other words, in switching circuit 4, terminal a is selected in a display period of R signal, and terminal b is selected in a vertical blanking period of R signal. As a result, a signal S1 in which a reference signal Sref is inserted into vertical blanking periods of an R signal is generated from switching circuit 4.

Signal processing controller 22 is connected to receive a horizontal synchronous signal H and a vertical synchronous signal V generated from HD signal generating circuit 61 shown in Fig. 1 and a clock signal CK, a frame pulse signal FP, and a H inversion signal INV generated from the control signal generating circuit 62 of Fig. 1. Controller 22, in response to these signals, generates various control signals required in R signal processing circuit 100R.

Signal S1 generated from switching circuit 4, after being bandwidth-limited by a low pass filter LPF 5, is supplied to an A/D converter 6. A/D converter 6 converts the supplied video signal sampled by CK buffered by controller 22 into n channel digital signals in response to a sampling pulse generated from controller 22. That is to say, A/D converter 6 converts a provided analogue signal into digital signals for every predetermined sampling cycle to form n channels of digital video signals.

The digital signals generated from A/D converter 6 are provided to a γ correction circuit 7 and a γ through circuit 8. γ correction circuit 7 receives digital signals and provides γ-corrected non-linear data. γ through circuit 8 provides linear data without γ-correction. γ correction circuit 7 and γ through circuit 8 operate alternately in response to control signals generated by controller 22. In other words, γ through circuit 8 provides linear data in periods in which the reference signal Sref is inserted, and γ correction circuit 7 provides γ-corrected non-linear data in other periods. By alternately operating circuits 7 and 8, operating processes employing the reference signal Sref which will be described later can be performed easily.

Output signals generated by γ correction circuit 7 and γ through circuit 8 are supplied to D/A converters 9₁-9ₙ. Each of D/A converters 9₁-9ₙ sequentially converts a digital signal into an analogue signal in response to a control signal generated by controller 22. In addition, each of D/A converters 9₁-9ₙ performs signal inverting process for each horizontal period. The signal inverting process is necessary for alternating-current driving a liquid crystal panel. In a vertical blanking period in which a reference signal Sref is inserted, it is preferable not to perform this signal inverting process.

The respective signals generated by D/A converters 9₁-9ₙ are provided through adders for offset adjustment 11₁-11ₙ, low-pass filters 12₁-12ₙ, attenuators 16₁-16ₙ buffers 17₁-17ₙ, resistors 19₁-19ₙ, and output terminals 27R1-27Rn, respectively. The provided signals R1-Rn are supplied to liquid crystal module 64 as video signals for R panel shown in Fig. 1.

The upper limit of frequency bandwidth of the circuit between A/D converters 9₁-9ₙ and output terminals 27R₁-27Rₙ is preferably set at cut-off frequency of LPF12₁-12ₙ to restrain difference of n channels. That is, the cut-off frequency of LPF does not follow the general Nyquist principle. This is important as technology for giving quantization effect and obtaining high horizontal resolution when performing digital horizontal scanning.

The signals provided from the respective buffers 17₁-17ₙ are also supplied to microcomputer 21 through switching circuits 18₁-18ₙ low-pass filters 24 and A/D converter 23. That is to say, switching circuits 18₁-18ₙ responsive to control signals generated by controller 22 sequentially and alternately turn on in the periods in which a reference signal Sref is inserted. As a result, reference signal components inserted in vertical blanking periods of the respective signals R1-Rn are sequentially extracted, and the extracted signal components are converted into digital signals by A/D converter 23.

Microcomputer 21 switches channels to be processed for every two horizontal periods, for example, and performs processing necessary for full scale level control of D/A converters 9₁-9ₙ and for offset level control by adders 11₁-11ₙ. The process will be described in detail later.

As a result of processing in microcomputer 21, data Df1-Dfn for controlling full scale level of D/A converters 9₁-9ₙ and data Do1-Don for controlling offset level by adders 11₁-11ₙ are generated. Full scale level control data Df1-Dfn are supplied to D/A converters (D/Aₙ) 10₁-10ₙ for full scale control in non-inverted period and full scale level control D/A converters (D/A_{I}) 25₁-25ₙ in inverted period. Switching circuits 26₁-26ₙ are connected to outputs of the respective pairs of D/A converters 10₁ and 25₁ through 10ₙ and 25ₙ. Switching circuits 26₁-26ₙ, in response to control signals generated by the controller, alternately select ones of the pairs of D/A converters and supply control signals to full scale level control terminals of the corresponding D/A converters 9₁-9ₙ.

Similarly, offset level control data Do1-Don are given to offset level control D/A converters 13₁-13ₙ in non-inverted period and offset level control D/A converters 14₁-14ₙ in inverted period. Switching circuits 15₁-15ₙ are respectively connected to the outputs of the respective pairs of D/A converters 13₁ and 14₁ through 13ₙ and 14ₙ Switching circuits 15₁-15ₙ supply offset signals to the corresponding adders 11₁-11ₙ in response to control signals generated from controller 22.

While each of switching circuits 26₁-26ₙ and 15₁-15ₙ shown in Fig. 2 is composed of an analogue switching circuit, a digital switching circuit in which D/A converters 10₁, 25₁, 13₁ and 14₁ are implemented in a single circuit is also applicable. Use of digital switching circuits is beneficial. This will be understood easily by those skilled in this art.

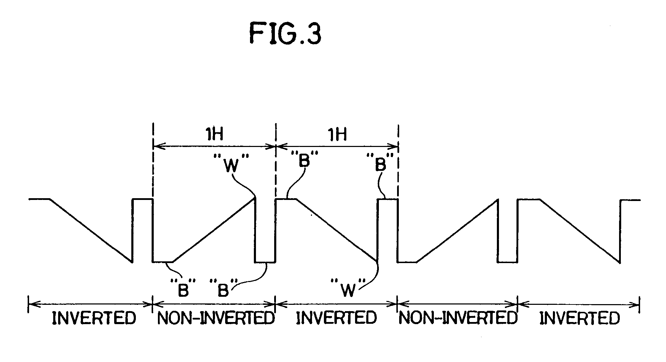

A waveform of a video signal in the display period is shown in Fig. 3. To AC-drive the liquid crystal panel, the video signal is inverted for every one horizontal period (1H) as shown in Fig. 3. That is, in a non-inverted period, the lowest level corresponds to black "B" and the highest level corresponds to white "W". On the other hand, in an inverted period, the highest level corresponds to black "B" and the lowest level corresponds to white "W". In this way, to AC-drive the liquid crystal panel, a video signal is inverted for every horizontal period. It is necessary that a consideration is given about signal inverting process in full scale level control and offset level control as well, since inverting process for AC driving is also performed in the circuit shown in Fig. 2.

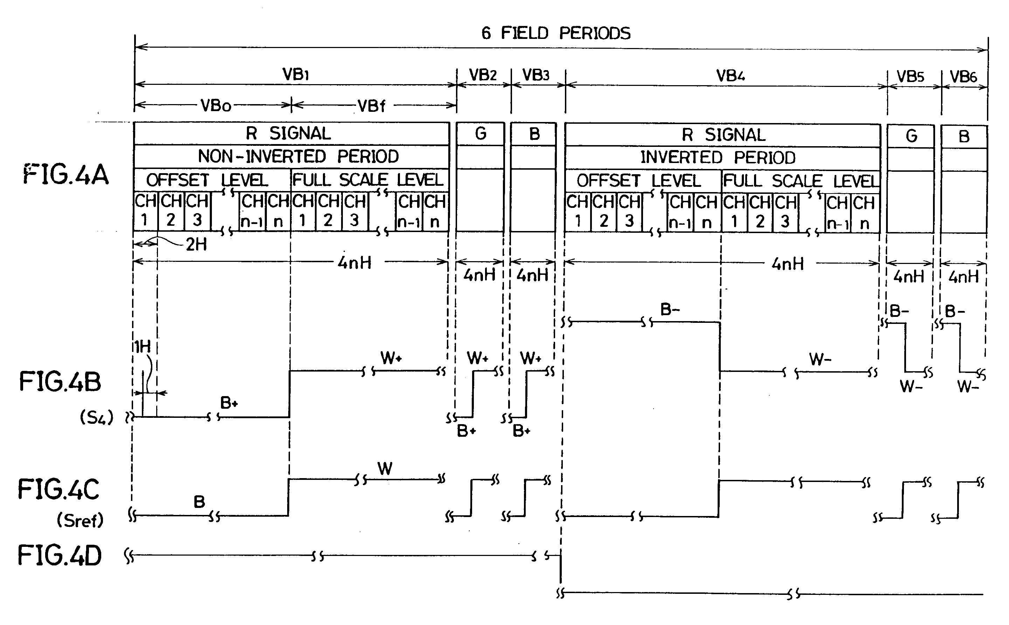

The level of the reference signal Sref generated by reference signal generator 20 shown in Fig. 2 has two values as shown in Fig. 4B. In Figs. 4A-4D, display periods DP1-DP6 are not shown. The first vertical blanking period VB1 is used for offset level control and full scale level control of the R signal in the non-inverted period as shown in Fig. 4A. That is, as shown in Fig. 4C, signal level "B+" for offset level control is generated as reference signal Sref in the period VBo which is the first half of the period VB1. A signal Sref having signal level "W+" for full scale level control is generated in the latter half period VBf. In this case, the signal S4 shown in Fig. 4B is stored in a memory in microcomputer 21 through A/D 23.

In the vertical blanking period in the second field, or in the second vertical blanking period, a similar control in non-inverted period is performed for the G signal. Accordingly, similarly to the case of the first vertical blanking VB1, the reference signal Sref produces potential for producing information of non-inverted offset level "B+" in the first half of the period, and produces potential for giving digital data of non-inverted full scale level "W+" to microcomputer 21 in the latter half. Furthermore, in the third vertical blanking period VB3, similarly, reference signal Sref for giving data of non-inverted offset level "B+" and non-inverted full scale level "W+" are generated.

In the fourth, fifth and sixth vertical blanking periods, the Sref similarly attains levels for offset level control and full scale level control. In this case, signal inverting is performed by D/A converters 9₁ through 9ₙ.

Reference signal generator 20 shown in Fig. 2, as shown in Fig. 4D, generates a stable binary signal for forming R G B information necessary to obtain data to be controlled in six fields.

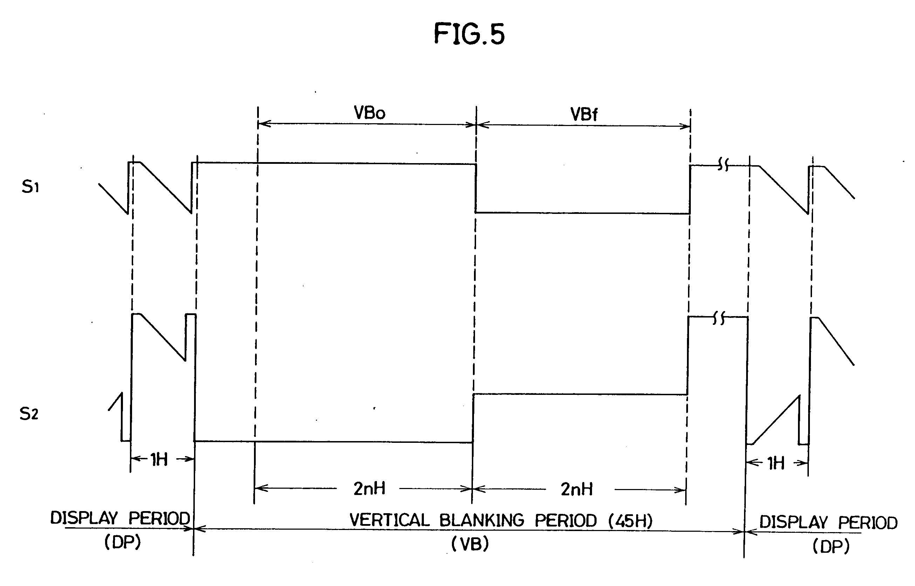

A change of a signal in a certain vertical blanking period is shown in Fig. 5. In Fig. 5, the signal S1 is one in which a reference signal Sref is inserted by switching circuit 4 shown in Fig. 2, and the signal S2 shows an output signal of buffer 17₁. In the embodiment shown in Fig. 2, the vertical blanking period VB has 45 times of horizontal cycles (45H). The offset level period Vbo and the full scale level period Vbf have time periods of 2nH, respectively (n corresponds to the number of channels in the circuit shown in Fig. 2).

This is because the signal S4 has to be precisely given to microcomputer 21 shown in Fig. 2. Thus, considering the resolution and converting time of A/D converter 23 and generation of system noise, the cut-off frequency of LPF 24 is reduced. Under this cut-off frequency, operable switching time is selected. Accordingly, 45H is selected in this embodiment, but a value less than 1/10 of that can be selected theoretically.

With respect to the level of the reference signal Sref (B and W), the level of the signal Sref is limited by A/D converters 9₁-9ₙ. Accordingly, as signal Sref level, to set a W value of 100% and a B value of 0% is not preferable in the control system because of non-linear controlling. Accordingly, the level of the reference signal Sref is set in the vicinity of a W value of 100% and in the vicinity of a B value of 0% in present invention.

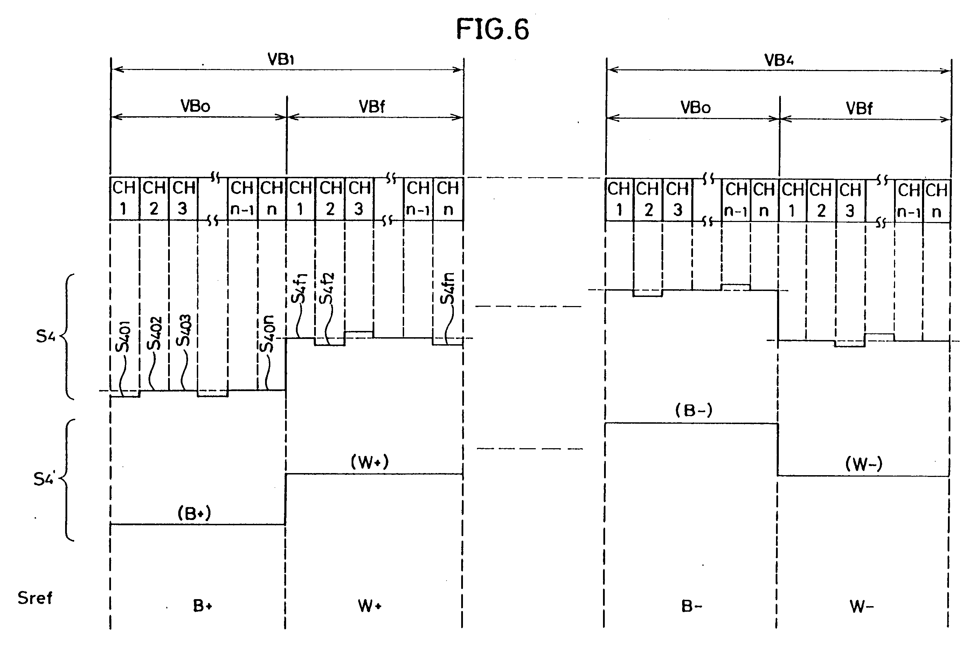

Referring to Fig. 6, operations for full scale level control and offset level control in the circuit shown in Fig. 2 will be described. As already described, in the first vertical blanking period VB1, offset level control and full scale level control in non-inverted period of the R signal are performed. Furthermore, in the fourth vertical blanking period, offset level control and full scale level control in inverted period of the R signal are performed. In the first half period Vbo of the first vertical blanking period VB1, a reference signal Sref having "B+" is generated, which signal is inserted in the R signal through switching circuit 4. The inserted signal S1, after being converted into digital signals by A/D converter 6, is subjected to signal processing by D/A converters 9₁-9ₙ and adders 11₁-11ₙ and so forth. Since there are deviations of circuit characteristics among signal processing circuits of the respective channels, the signal S4 provided to microcomputer 21 through switching circuits 18₁-18ₙ has deviations. That is, as shown in Fig. 6, according to the deviations of circuit characteristics for the respective channels, the levels of signal S4 are different from each other (S41, S42, ...S4n). Since the levels of signal S4 are obtained according to the inserted reference signal Sref, it is ideal that there is no deviation among these signal levels. However, due to deviations among signal processing circuits for respective channels, deviations are caused among levels of signals S41-S4n. Microcomputer 21, according to the signals So1-Sfn, reduces deviation among these signals S41-S4n by performing the following processes.

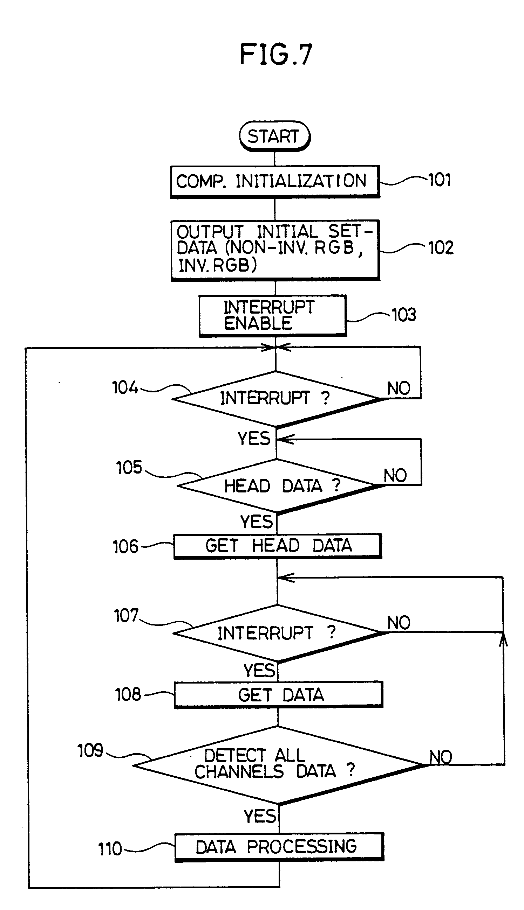

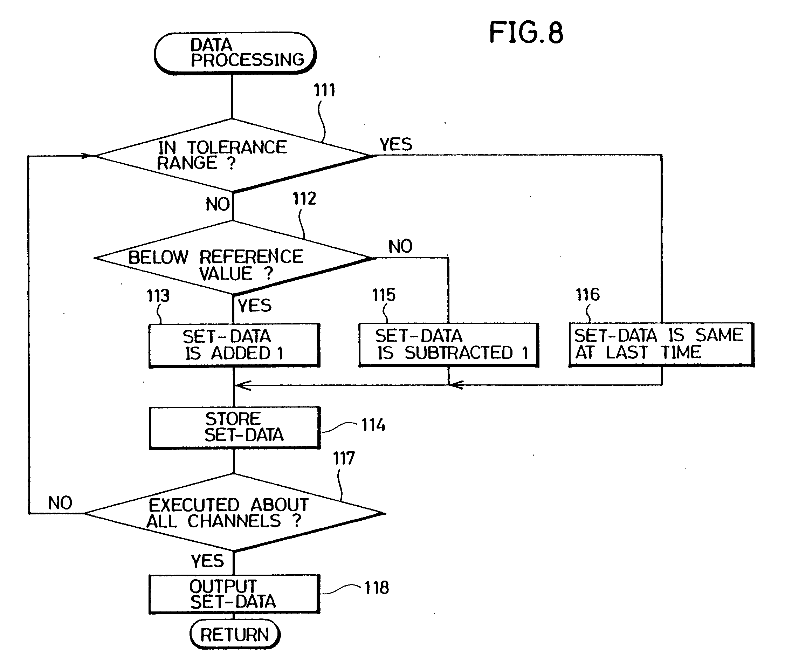

Referring to Figs. 7 and 8, processing in microcomputer 21 will be described. Microcomputer 21 performs some initializations in step 101.

In step 102, initial data Do1-Don for offset level control of a non-inverted signal and initial data Df1-Dfn for full scale level control of non-inverted signals in the respective channels of the R signal are generated. The initial data Do1-Don for offset level control are supplied to D/A converters 13₁-13ₙ, and the initial data Df1-Dfn for full scale level control are supplied to D/A converters 10₁-10ₙ. Accordingly, initial values are set at full scale level control inputs of D/A converters 9₁-9ₙ, and initial values are set at offset level control inputs of adders 11₁-11ₙ. As a result, in the first vertical blanking period VB1, signals S4o1-S4on and S4f1-S4fn are generated according to the initial offset and full scale control.

In parallel to or simultaneously with the above processing, initial values are also set in the processing system for a non-inverted signal of the G signal, the processing system for a non-inverted signal of the B signal, the processing system of an inverted signal of the R signal, the processing system for an inverted signal for the G signal, and the processing system for an inverted signal of the B signal.

In step 103, an interruption due to measuring is permitted.

In step 104, a determination is made as to whether an interruption is requested or not. Interruption signals are continuously supplied from controller 22 to reference signal generator 20 on a cycle of 2 horizontal periods in vertical blanking periods. Interruption signals are supplied in synchronization with horizontal periods of even number times of reference signal Sref of 4nH inserted in vertical blanking periods of the respective fields. When an interruption request is produced, the process in step 105 is started.

In step 105, it is determined whether the input data is head data (data of offset level and full scale level for N channels (2n data)). Since a flag indicating head data has been supplied from controller 22 in synchronization with the second horizontal period of reference signal Sref of 4nH inserted in vertical blanking periods of the respective fields, this determination is made according to whether this flag was supplied simultaneously with an interruption or not. When it is determined to be head data, the process in step 106 is started.

In step 106, the head data is captured. In this case, in the first field, connection switch 18₁ is connected and offset level (B+) of a non-inverted signal of the first channel of the R signal is detected (measured).

A switching circuit corresponding to the channel to be detected next time turns on in the horizontal blanking period after the data has been captured. In this case, the switching circuit 18₂ is turned on after switching circuit 18₁.

In step 107, it is determined whether an interruption is requested or not. When an interruption request exists, the process in step 108 is started.

In step 108, data of offset level (B+) of non-inverted signals of the second-n'th channels of the R signals and full scale level (W+) of non-inverted signals of the first-n'th channels are captured.

In step 109, a determination is made whether all of data of offset level and full scale level for n channels (2n) have been detected or not. In steps 107 and 108, data are repeatedly captured until 2n data are all detected.

The data process in step 110 is performed as shown in Fig. 8.

Referring to Fig. 8, in step 111, B+ level data in the first channel and its reference value data are compared with each other to determine whether the difference is in the tolerance range or not. When the difference is not in the tolerance range, the process advances to step 112, and if it is in the tolerance range, the process advances to step 116.

In step 112, it is determined whether the difference is below the reference value or not.

When it is below the reference value, in step 113, the set data of offset level of a non-inverted signal in the first channel is increased by quantized data "1" and the increased data is stored in a memory in microcomputer 21 in step 114.

If it is not below the reference value, in step 115, the set data of offset level of a non-inverted signal in the first channel is decreased by quantized data "1", and the decreased data is stored in a memory in microcomputer 21 in step 114.

In step 116, with the set data maintained, the set data is stored in a memory in microcomputer 21 in step 114.

In step 117, it is determined whether all of the data of offset level and full scale level for n channels (2n) have been processed or not. The data processing in steps 111-116 is repeated until all of 2n data have been detected. When the processing is completed for all the 2n data, the process in step 118 is started.

In step 118, offset level control data Do1-Don, and full scale level control data Df1-Dfn are outputted. Data Do1-Don are applied to D/A converters 13₁-13ₙ shown in Fig. 2, and data Df1-Dfn are applied to D/A converters 10₁-10ₙ. Accordingly, new values are set at full scale level control inputs of D/A converters 9₁-9ₙ and offset level control inputs of adders 11₁-11ₙ.

Thus, process in the first field is completed, and adjustment of the processing system of the non-inverted signal of the R signal is completed.

After this, similar processing to those that described above, or steps 104-110 of Fig. 7, is repeated and processing is applied to the second through the sixth fields. In the second and the third fields, adjustment of the processing system of non-inverted signals of the G signal, B signal is performed, respectively. In the fourth through the sixth fields, adjustment of the processing systems of inverted signals of the R signal, G signal, and B signal is performed, respectively. Here, 1 cycle processing for adjustment of all the signal processing systems is completed.

Subsequently, similar processes are repeated on a cycle of 6 fields.

As described above, in this embodiment, step 118 (in Fig. 8) is executed from performing the adjustment of non-inverted signal and inverted signal of respective color system in different vertical blanking periods (VB1, VB4 in R system).

However, it is better to perform the "OUTPUT SET-DATA" step 118 of non-inverted signal and inverted signal in the same vertical blanking period, according to ideal operation.

It is a precondition to complete detecting from S4o1 to S4fn, data processing and OUTPUT SET-DATA in predetermined vertical blanking period based on input Sref.

However, there is a case which said ideal operation cannot be achieved because of the total processing time period of microcomputer 21 to measure, perform data processing and output set-data.

However, said ideal operation is not so difficult by using a high speed processing microcomputer to handle high resolution image.

As described above, the offset level control data Do1-Don provided from microcomputer 21 are supplied to D/A converters 13₁-13ₙ and 14₁-14ₙ for the offset level control. D/A converters 13₁-13ₙ convert the provided data into analogue signals and provide the converted signals to the respective terminals a of switching circuits 15₁-15ₙ. Similarly, D/A converters 14₁-14ₙ also convert the data Do1-Don in inverted periods into analogue signals, and provide the converted signals to the respective terminals b of switching circuits 15₁-15ₙ. Switching circuits 15₁-15ₙ, in response to control signals generated by controller 22, alternately select one of terminals a and b. In other words, terminal a is selected in a non-inverted period of the R signal and terminal b is selected in an inverted period. As a result, signals for offset level control are provided to adders 11₁-11ₙ through switching circuits 15₁-15ₙ in appropriate timing, respectively.

Similarly, in the full scale level control, D/A converters 10₁-10ₙ and 25₁-25ₙ and switching circuits 26₁-26ₙ similarly operate. Each of D/A converters 9₁-9ₙ has a terminal for full scale level control. That is, by controlling voltage level applied to a terminal for full scale level, the maximum level of an output signal generated by a D/A converter is controlled. A signal provided from each of switching circuits 26₁-26ₙ is provided to a terminal for full scale level control of each of D/A converters 9₁-9ₙ, so that the full scale level control can be suitably performed for each channel.

As described above, in the video signal processing circuit shown in Fig. 2, reference signal generator 20 generates a reference signal Sref for defining offset level and full scale level in the non-inverted period and the inverted period of the R signal. The generated reference signal Sref is inserted into vertical blanking periods of the R signal by switching circuit 4. Accordingly, a signal S1 having the waveform shown in Fig. 5 is provided from switching circuit 4. This signal S1 is converted into digital signals by A/D converter 6 and then subjected to signal processing by D/A converters 9₁-9ₙ, adders 11₁-11ₙ and so forth. Accordingly, the signals provided from the respective buffers 17₁-17ₙ are affected by the deviations of circuit characteristics which exist in signal processing circuits of the respective channels. The signals provided from buffers 17₁-17ₙ are supplied to microcomputer 21 through switching circuits 18₁-18ₙ. Microcomputer 21 generates data Df1-Dfn and Do1-Don to restrain deviations of reference signal components caused by the deviations of circuit characteristics of the respective channels. On the basis of the full scale level control data Df1-Dfn, the full scale levels of the respective D/A converters 9₁-9ₙ are controlled. Similarly, on the basis of the offset level control data Do1-Don, the offset level by each of adders 11₁-11ₙ is controlled. As a result, the deviations produced among sampled video signals due to difference in circuit characteristics among channels can be reduced. This also yields an improvement of picture quality of the image obtained according to the sampled video signals, or the video signals R1-Rn. Furthermore, in the liquid crystal display device shown in Fig. 1, the picture quality of the image displayed on the liquid crystal module 64 is improved.

Although an embodiment of the present invention has been described and illustrated in detail, it is clearly understood that the same is by way of illustration and example only and is not to be taken by way of limitation, the scope of the present invention being defined by the claims.

## Claims

1. A video signal processing device for generating display drive signals (R1-Rn) from an applied video signal, the device comprising:
sampling means for sampling the applied video signal (R) in a predetermined cycle so as to divide the signal into n sampled video signals, n ≧ 2, between or among which sampled video signals the picture information is divided, said sampling means comprising A/D converting means (6) for converting the applied video signal into n digital signals in said predetermined cycle;
n signal processing means (9,11,12,16,17) connected to an output of said A/D converting means, for applying predetermined signal processing to the respective converted digital video signals so as to generate respective display drive signals, said n signal processing means including n D/A converting means (9₁-9ₙ) for converting the respective converted digital video signals into n analogue signals;
reference signal means (22,20,4) for inserting a reference signal into the vertical blanking period of the supplied video signal before the applied video signal is sampled by the sampling means;
detecting means (18,23) for detecting the reference signals as appearing in the processed signals output by the respective signal processing means; and
control means (21,10,25,26;21,13,14,15) for controlling said processed signals output by the signal processing means, each according to whether the associated detected reference signal lies within a predetermined range, so as to adjust for differences between or among the circuit characteristics of the n signal processing means;
said control means comprising full scale level control means (21,10,25,26) for controlling the vicinity of the highest level of the processed signals output by said signal processing means by controlling full scale level of each of said n D/A converting means.

2. A video signal processing device according to claim 1, wherein said control means further comprises lowest level control means (21,13,14,15) for controlling the vicinity of the lowest level of the processed signals output by said signal processing means.

3. A video signal processing device according to claim 2, wherein said n signal processing means comprise n offset adding means (11) connected to receive said n analogue signals respectively and for adding an offset signal to each analogue signal.

4. A video signal processing device according to claim 3, wherein said lowest level control means comprises offset control means (21,13,14,15) for controlling the level of said offset signal to be added by said offset adding means.

5. A video signal processing device according to any preceding claim, wherein:
said reference signal comprises a highest level vicinity reference signal for defining the vicinity of the changeable highest level of said video signal and a lowest level vicinity reference signal for defining the vicinity of the changeable lowest level of said video signal;
said reference signal means inserts said highest and lowest level reference signals into a single vertical blanking period of the video signal; and
said control means controls the changeable highest level and lowest level of each of the processed signals output by said signal processing means.

6. A video signal processing device according to any preceding claim, wherein said detecting means comprises sequential extraction means (18), connected to the output of said n signal processing means, for sequentially extracting level reference signal components included in the respective outputs of said n signal processing means, in response to a horizontal synchronous signal.

7. A video signal processing device according to claim 6, wherein said sequential extraction means comprises n switching means (18), connected to the respective outputs of said n signal processing means and sequentially turning on in response to said horizontal synchronous signal, whereby the level reference signal components included in the respective outputs of said n signal processing means are sequentially extracted.

8. A video signal processing device according to any preceding claim, wherein said video signal comprises one of three primary colour signals of red (R), green (G) and blue (B).

9. A video signal processing device according to any preceding claim and adapted for driving a liquid crystal display, the device further comprising means (22) for inverting the output sampled video signal in alternate horizontal scanning periods.

10. A video signal processing device according to any preceding claim, wherein the applied video signal is an HDTV signal.

## Patentansprüche

1. Videosignal-Verarbeitungsvorrichtung zum Erzeugen von Anzeigesteuersignalen (R1 - Rn) aus einem angelegten Videosignal, mit:
- einer Abtasteinrichtung zum Abtasten des angelegten Videosignals (R) mit einem vorgegebenen Zyklus, um das Signal in n, n ≧ 2, abgetastete Videosignale zu unterteilen, wobei die Bildinformation auf die abgetasteten Videosignale verteilt ist, welche Abtasteinrichtung eine A/D-Umsetzeinrichtung (6) zum Umsetzen des angelegten Videosignals in n digitale Signale innerhalb des vorgegebenen Zyklus aufweist;
- n Signalverarbeitungseinrichtungen (9, 11, 12, 16, 17), die mit einem Ausgang der A/D-Umsetzeinrichtung verbunden sind, um auf die jeweiligen umgesetzten digitalen Videosignale eine vorgegebene Signalverarbeitung anzuwenden, um jeweilige Anzeigesteuersignale zu erzeugen, welche n Signalverarbeitungseinrichtung n D/A-Umsetzeinrichtungen (9₁ - 9ₙ) zum Umsetzen der jeweiligen umgesetzten digitalen Videosignale in n analoge Signale beinhalten;
- einer Bezugssignaleinrichtung (22, 20, 4) zum Einfügen eines Bezugssignals in die vertikale Austastlücke des zugeführten Videosignals, bevor das angelegte Videosignal durch die Abtasteinrichtung abgetastet wird;
- einer Erfassungseinrichtung (18, 23) zum Erfassen der Bezugssignale, wie sie in den von der jeweiligen Signalverarbeitungseinrichtung ausgegebenen verarbeiteten Signale auftreten; und
- einer Steuereinrichtung (21, 10, 25, 26; 21, 13, 14, 15) zum Steuern der von den Signalverarbeitungseinrichtungen ausgegebenen verarbeiteten Signale, jeweils abhängig davon, ob das zugehörige erfaßte Bezugssignal innerhalb eines vorgegebenen Bereichs liegt, um Unterschiede zwischen den Schaltungscharakteristiken der n Signalverarbeitungseinrichtungen einzustellen;
- wobei die Steuereinrichtung eine Einrichtung (21, 10, 25, 26) zur Vollhubpegel-Steuerung aufweist, um in der Nähe des höchsten Pegels der von den Signalverarbeitungseinrichtungen ausgegebenen verarbeiteten Signale eine Steuerung dadurch vorzunehmen, daß der Vollhubpegel jeder der n D/A-Umsetzeinrichtungen eingestellt wird.

2. Videosignal-Verarbeitungsvorrichtung nach Anspruch 1, bei der die Steuereinrichtung ferner eine Steuereinrichtung (21, 13, 14, 15) für den niedrigsten Pegel aufweist, um in der Nähe des niedrigsten Pegels der von den Signalverarbeitungseinrichtungen ausgegebenen verarbeiteten Signale eine Einstellung vorzunehmen.

3. Videosignal-Verarbeitungsvorrichtung nach Anspruch 2, bei der die n Signalverarbeitungseinrichtungen n Versatzaddiereinrichtungen (11) beinhalten, die so angeschlossen sind, daß sie jeweils die n analogen Signale empfangen, um zu jedem Analogsignal ein Versatzsignal zu addieren.

4. Videosignal-Verarbeitungsvorrichtung nach Anspruch 3, bei der die Steuereinrichtung für den niedrigsten Pegel eine Versatzsteuereinrichtung (21, 13, 14, 15) zum Einstellen des Pegels des durch die Versatzaddiereinrichtung zu addierenden Versatzsignals aufweist.

5. Videosignal-Verarbeitungsvorrichtung nach einem der vorstehenden Ansprüche, in der:
- das Bezugssignal ein Bezugssignal für die Nähe zum höchsten Pegel aufweist, um die Nähe des änderbaren höchsten Pegels des Videosignals zu definieren, und ein Bezugssignal für die Nähe zum niedrigsten Pegel aufweist, um die Nähe des änderbaren niedrigsten Pegel des Videosignals zu definieren;
- wobei die Bezugssignaleinrichtung die Bezugssignale für den höchsten und niedrigsten Pegel in eine vertikale Austastlücke des Videosignals einfügt; und
- wobei die Steuereinrichtung den änderbaren höchsten Pegel und niedrigsten Pegel jedes der von der Signalverarbeitungseinrichtung ausgegebenen verarbeiteten Signale steuert.

6. Videosignal-Verarbeitungsvorrichtung nach einem der vorstehenden Ansprüche, bei der die Erfassungseinrichtung eine sequentiell arbeitende Entnahmeeinrichtung (18) aufweist, die mit den Ausgängen der n Signalverarbeitungseinrichtungen verbunden ist, um Bezugssignal-Pegelkomponenten, wie sie in den jeweiligen Ausgangssignalen der n Signalverarbeitungseinrichtungen enthalten sind, sequentiell auf ein Horizontalsynchronisiersignal hin zu entnehmen.

7. Videosignal-Verarbeitungsvorrichtung nach Anspruch 6, bei der die sequentiell arbeitende Entnahmeeinrichtung n Umschalteinrichtungen (18) aufweist, die mit den jeweiligen Ausgängen der n Signalverarbeitungseinrichtungen verbunden sind und die auf das Horizontalsynchronisiersignal hin sequentiell einschalten, wodurch die in den jeweiligen Ausgangssignalen der n Signalverarbeitungseinrichtungen enthaltenen Bezugssignal-Pegelkomponenten sequentiell entnommen werden.

8. Videosignal-Verarbeitungsvorrichtung nach einem der vorstehenden Ansprüche, bei der das Videosignal eines von drei Primärfarbsignalen für rot (R), grün (G) und blau (B) umfaßt.

9. Videosignal-Verarbeitungsvorrichtung nach einem der vorstehenden Ansprüche, die so ausgebildet ist, daß sie ein Flüssigkristalldisplay ansteuert, wobei die Vorrichtung ferner eine Einrichtung (22) zum Invertieren des abgetasteten Ausgangsvideosignals in abwechselnden Horizontalabrasterperioden aufweist.

10. Videosignal-Verarbeitungsvorrichtung nach einem der vorstehenden Ansprüche, bei der das angelegte Videosignal ein HDTV-Signal ist.

## Revendications

1. Dispositif de traitement de signaux vidéo, destiné à engendrer des signaux d'attaque d'afficheur (R1 à Rn) à partir d'un signal vidéo appliqué, le dispositif comprenant:
des moyens d'échantillonnage pour échantillonner le signal vidéo appliqué (R), dans un cycle prédéterminé, de façon à subdiviser le signal en n signaux vidéo échantillonnés, n ≧ 2, signaux vidéo échantillonnés entre ou parmi lesquels les informations d'image sont réparties, lesdits moyens d'échantillonnage comprenant un moyen de conversion A/N (6) pour convertir le signal vidéo appliqué en n signaux numériques, dans ledit cycle prédéterminé;
n moyens de traitement de signaux (9, 11, 12, 16, 17) reliés à une sortie dudit moyen de conversion A/N, pour mettre en oeuvre un traitement de signaux prédéterminé sur les signaux vidéo numériques convertis respectifs, de façon à engendrer des signaux d'attaque d'afficheur respectifs, lesdits n moyens de traitement de signaux comprenant n moyens de conversion N/A (9₁ à 9ₙ) pour convertir les signaux vidéo numériques convertis respectifs en n signaux analogiques;
des moyens à signaux de référence (22, 20, 4) pour insérer un signal de référence dans la période de suppression verticale du signal vidéo fourni, avant que le signal vidéo appliqué soit échantillonné par les moyens d'échantillonnage;
des moyens de détection (18, 23) pour détecter les signaux de référence au moment où ils apparaissent dans les signaux traités, délivrés par les moyens de traitement de signaux respectifs; et
des moyens de commande (21, 10, 25, 26; 21, 13, 14, 15) pour agir sur lesdits signaux traités, délivrés par les moyens de traitement de signaux, chacun en fonction du fait que le signal de référence détecté associé se trouve à l'intérieur d'une plage prédéterminée, de façon à régler des différences entre ou parmi les caractéristiques de circuit des n moyens de traitement de signaux;
lesdits moyens de commande comprenant un moyen de commande de niveau à pleine échelle (21, 10, 25, 26) pour ajuster le voisinage du niveau le plus haut des signaux traités, délivrés par lesdits moyens de traitement de signaux, en agissant sur le niveau à pleine échelle de chacun desdits n moyens de conversion N/A.

2. Dispositif de traitement de signaux vidéo selon la revendication 1, dans lequel lesdits moyens de commande comprennent, en outre, un moyen de commande du niveau le plus bas (21, 13, 14, 15) pour ajuster le voisinage du niveau le plus bas des signaux traités, délivrés par lesdits moyens de traitement de signaux.

3. Dispositif de traitement de signaux vidéo selon la revendication 2, dans lequel lesdits n moyens de traitement de signaux comprennent n moyens additionneurs de décalage (11), montés de façon à recevoir respectivement lesdits n signaux analogiques et destinés à additionner un signal de décalage à chaque signal analogique.

4. Dispositif de traitement de signaux vidéo selon la revendication 3, dans lequel ledit moyen de commande du niveau le plus bas comprend un moyen de commande de décalage (21, 13, 14, 15) pour ajuster le niveau dudit signal de décalage devant être ajouté par lesdits moyens additionneurs de décalage.

5. Dispositif de traitement de signaux vidéo selon l'une quelconque des revendications précédentes, dans lequel:
ledit signal de référence comprend un signal de référence du voisinage du niveau le plus haut, définissant le voisinage du niveau le plus haut modifiable dudit signal vidéo, et un signal de référence du voisinage du niveau le plus bas, définissant le voisinage du niveau le plus bas modifiable dudit signal vidéo;
lesdits moyens à signaux de référence insèrent lesdits signaux de référence du niveau le plus haut et du niveau le plus bas dans une période de suppression verticale unique du signal vidéo; et
lesdits moyens de commande ajustent le niveau le plus haut et le niveau le plus bas, modifiables, de chacun des signaux traités, délivrés par lesdits moyens de traitement de signaux.

6. Dispositif de traitement de signaux vidéo selon l'une quelconque des revendications précédentes, dans lequel lesdits moyens de détection comprennent un moyen d'extraction séquentielle (18), relié à la sortie desdits n moyens de traitement de signaux, pour extraire séquentiellement des composantes de signal de référence de niveau, incluses dans les sorties respectives desdits n moyens de traitement de signaux, en réponse à un signal horizontal synchrone.

7. Dispositif de traitement de signaux vidéo selon la revendication 6, dans lequel ledit moyen d'extraction séquentielle comprend n moyens de commutation (18), reliés aux sorties respectives desdits n moyens de traitement de signaux et passant séquentiellement à l'état conducteur en réponse audit signal horizontal synchrone, grâce à quoi les composantes de signal de référence de niveau, incluses dans les sorties respectives desdits n moyens de traitement de signaux, sont extraites séquentiellement.

8. Dispositif de traitement de signaux vidéo selon l'une quelconque des revendications précédentes, dans lequel ledit signal vidéo comprend l'un des trois signaux de couleur fondamentale correspondant au rouge (R), au vert (G) et au bleu (B).

9. Dispositif de traitement de signaux vidéo selon l'une quelconque des revendications précédentes et adapté pour attaquer un afficheur à cristaux liquides, le dispositif comprenant, en outre, des moyens (22) pour inverser le signal vidéo échantillonné délivré dans une période de balayage horizontal sur deux.

10. Dispositif de traitement de signaux vidéo selon l'une quelconque des revendications précédentes, dans lequel le signal vidéo appliqué est un signal de télévision haute définition.
